# FASCICULE DE BREVET EUROPEEN

(11) **EP 3 959 136 B1**
(45) Date de publication et mention de la délivrance du brevet: **11.06.2025**
(21) Numéro de dépôt: 20749928.6
(22) Date de dépôt: 23.04.2020
(51) Int. Cl.: B64D 33/02, F02C 7/04, F02C 7/047

(54) **ENTRÉE D'AIR DE NACELLE ET NACELLE COMPORTANT UNE TELLE ENTRÉE D'AIR**
GONDELLUFTEINLASS UND GONDEL MIT EINEM SOLCHEN LUFTEINLASS
NACELLE AIR INTAKE AND NACELLE COMPRISING SUCH AN AIR INTAKE

(30) Priorité: 26.04.2019 FR 1904429
(43) Date de publication de la demande: 02.03.2022
(73) Titulaire: Safran Nacelles, 76700 Gonfreville l'Orcher (FR)
(72) Inventeur: FERRIER, Gina, 77550 Moissy Cramayel (FR); BOILEAU, Patrick, 77550 Moissy Cramayel (FR)
(74) Mandataire: Germain Maureau
(86) Numéro de dépôt international: PCT/FR2020/050695
(87) Numéro de publication internationale: WO 2020/217026

(56) Documents cités:
- FR-A1- 2 856 379
- FR-A1- 2 856 379
- FR-A1- 2 966 126
- FR-A1- 2 966 126
- FR-A1- 2 998 548
- FR-A1- 2 998 548
- FR-A1- 3 016 159
- FR-A1- 3 016 159
- US-A1- 2008 016 844
- US-A1- 2008 016 844

## Description

La présente invention concerne un ensemble propulsif d'aéronef comprenant une nacelle et un moteur tel qu'un turboréacteur, et concerne en particulier une entrée d'air d'une telle nacelle.

Un aéronef est mû par un ou plusieurs turboréacteurs logés chacun dans au moins une nacelle. La nacelle présente généralement une structure tubulaire comprenant une section d'entrée d'air en amont du turboréacteur, une section médiane destinée à entourer une soufflante du turboréacteur, et une section aval abritant les moyens d'inversion de poussée.

La section aval de la nacelle entoure le générateur de gaz du turboréacteur qui est terminé par une tuyère d'éjection située en aval du turboréacteur.

La section d'entrée d'air de la nacelle comporte notamment une lèvre avant de forme générale annulaire qui intercepte le flux d'air d'entrée de la nacelle qui est dirigé vers une soufflante.

Pour ce faire, le reste de la structure d'entrée d'air présente une structure sensiblement annulaire comprenant un panneau ou paroi externe assurant la continuité aérodynamique externe de la nacelle et un panneau ou paroi interne assurant la continuité aérodynamique interne de la nacelle, notamment avec le carter de soufflante au niveau de la section médiane. La lèvre d'entrée d'air assure la jonction entre ces deux parois en formant un bord d'attaque de la nacelle et peut notamment être intégrée au panneau externe et/ou interne formant ainsi une paroi principale de l'entrée d'air.

De manière générale, la lèvre avant est constituée par une pièce unique de forme annulaire qui est directement fixée sur des cloisons de support intérieures à la nacelle. On note aussi l'utilisation d'une cloison amont qui forme un volume annulaire derrière la lèvre avant en forme de « D ».

Plus précisément, la section d'entrée de nacelle comporte généralement :
- une paroi interne, de préférence munie d'une pièce acoustique interne sensiblement cylindrique ayant un bord amont et un bord aval, cette pièce formant une partie au moins d'une virole acoustique de l'entrée d'air étant appelée « inner barrel » en jargon anglo-saxon ;
- une paroi externe sensiblement cylindrique ;
- une lèvre avant reliant les parois interne et externe en formant un bord d'attaque ;
- une bride de montage aval configurée pour le montage de la section d'entrée à une bride avant d'une paroi du turboréacteur; et
- une cloison arrière présentant une extrémité aval pour solidariser la partie externe de la paroi externe à la bride de montage aval.

Une entrée de l'air pour une nacelle de moteur d'aéronef est connue du document FR 2 856 379 A1. D'autres entrées d'air sont connues d'après des documents FR 2 998 548 A1, FR 2 966 126 A1, FR 3 016 159 A1 et US 2008/0016844 A1.

Par ailleurs, l'entrée d'air comprend généralement un système de dégivrage. Un type de système de dégivrage ou d'antigivrage connu, présenté notamment par les documents EP 0 913 326 B1 ou US 2002/0179773 A1, comporte un tube circulaire faisant le tour de la nacelle, qui alimente en air chaud prélevé sur le turboréacteur, le volume intérieur de la lèvre avant de cette nacelle afin de réchauffer ses parois.

L'allongement de la lèvre avant de la nacelle est notamment recherché pour des raisons aérodynamiques, afin d'étendre vers l'aval la zone d'écoulement d'air laminaire. Mais son allongement n'est pas sans répercussion sur la conception du reste de la nacelle. En particulier, la nacelle doit présenter des performances de rigidité mécanique de manière à réduire ses déformations lors des sollicitations en fonctionnement.

Il en résulte que la pièce qui forme la lèvre avant qui limite l'entrée d'air frais de la nacelle présente en coupe une forme complexe et de grandes dimensions.

Pour résoudre ces problématiques, il a été développé le concept d'une lèvre dite « étendue » comprenant une paroi externe s'étendant très en aval par rapport à la paroi interne et venant recouvrir extérieurement une partie du carter de soufflante, la paroi externe ainsi que la lèvre formant une pièce intégrale, c'est-à-dire d'un seul tenant.

Une telle disposition décrite dans l'état de la technique permet une économie de masse de matériau et de complexité de pièces par rapport à l'état de la technique plus ancien dans lequel l'enveloppe externe et la lèvre avant de la section d'entrée de la nacelle sont constituées par des pièces séparées.

Cependant, pour que ces dispositions soient avantageuses, elles exigent l'adjonction de renforts annulaires, disposés à l'intérieur de l'enveloppe externe. La pièce unique ainsi formée, par ailleurs est d'une grande dimension et d'un volume important. Sa réalisation exige un outil complexe et coûteux.

Mais, la solution d'une lèvre intégrale avec la paroi externe de la section d'entrée de la nacelle se heurte aussi à des problèmes d'adaptation à d'autres exigences.

Parmi celles-ci, on citera notamment le problème de la maintenance. En effet, afin d'inspecter les différents systèmes comme le dégivrage ou inspecter l'état de la structure, il faut prévoir la possibilité d'accéder à l'espace compris entre les cloisons avant (ou amont) et arrière (ou aval) qui est alors inaccessible si la pièce formant la lèvre et la paroi externe sont d'un seul tenant.

La présente invention apporte un remède à ces inconvénients et propose notamment une solution présentant les avantages en termes d'aérodynamisme d'une lèvre dite étendue tout en assurant une maintenance améliorée.

A cet effet, la présente invention concerne une entrée d'air pour une nacelle de moteur d'aéronef, l'entrée d'air comportant une lèvre avant reliant une paroi interne sensiblement cylindrique et une paroi externe sensiblement cylindrique, une bride de montage avant configurée pour coopérer avec une bride arrière d'une paroi du turboréacteur, l'entrée d'air présentant une structure de support s'étendant d'une extrémité inférieure configurée pour être solidaire d'un carter de soufflante, au niveau de la bride arrière, jusqu'à une extrémité supérieure en contact au moins avec une partie aval de la paroi externe de l'entrée d'air, ladite structure de support comportant des fenêtres d'accès configurées être traversées par des outils de maintenance lors des opérations de maintenance de l'entrée d'air.

Grâce à une telle combinaison de caractéristique, le chemin d'efforts est amélioré entre l'entrée d'air et la nacelle, en particulier avec la bride arrière de la paroi du turboréacteur du carter de soufflante au niveau duquel la structure de support est configurée pour être solidarisée.

En référence à la structure de support, on comprendra par l'expression « solidarisée » que la structure de support est configurée pour être solidaire de la paroi du turboréacteur formant le carter de soufflante de sorte qu'un chemin de reprise des efforts, en position assemblée, passe de la paroi externe vers le carter de soufflante, sans passer par la paroi interne.

Préférentiellement, la structure de support est directement fixée à la bride arrière de la paroi du turboréacteur formant le carter de soufflante.

Par ailleurs, l'accessibilité aux fixations de l'entrée d'air sur le carter de soufflante est conservée grâce aux fenêtres d'accès qui en facilitent la maintenance, notamment après dépose et ouverture des capots extérieurs de soufflante.

Selon une caractéristique technique particulière, la lèvre d'entrée d'air peut être intégrée à la paroi interne et/ou externe.

De préférence encore, la lèvre d'entrée d'air peut être intégrée à la paroi interne et/ou externe de sorte à former ensemble une paroi d'un seul tenant.

En d'autres termes, la lèvre d'entrée d'air, la paroi interne et la paroi externe sont formées d'une seule pièce.

Selon l'invention, l'extrémité inférieure de la structure de support est configurée pour être solidaire d'une face arrière de la bride arrière. Cela participe encore à l'amélioration du chemin d'effort et au renfort de la structure.

Préférentiellement, l'extrémité inférieure de la structure de support est directement fixée à la face arrière de la bride arrière.

Avantageusement encore, la bride de montage avant et la bride arrière sont fixées ensemble par des moyens de fixation, la structure de support étant fixée à la bride arrière avec tout ou partie de ces mêmes moyens de fixation.

Une telle caractéristique permet d'éviter la multiplication des moyens de fixation et donc de gagner en masse et en simplicité de conception.

Alternativement, ces moyens de fixations pourront être distincts au moins en partie voir intégralement.

Selon une caractéristique technique particulière, la structure de support est disposée de manière sensiblement continue autour de la paroi du turboréacteur du carter de soufflante, et comporte par exemple une cloison.

Alternativement ou en complément, la structure de support est disposée de manière discontinue autour de la paroi du turboréacteur du carter de soufflante, et comporte par exemple un ensemble de tiges de support. Dans ce cas, un espace entre deux tiges peut délimiter une fenêtre d'accès pour la maintenance.

Avantageusement, la partie de la paroi externe de l'entrée d'air qui est au moins en contact avec l'extrémité supérieure de la structure de support, de préférence au niveau d'une surface de support de ladite structure de support, comprend une extrémité aval de la paroi externe.

Selon une autre caractéristique, en plus d'être en contact contre une surface de support de la structure de support, la paroi externe est en appui contre elle et fixée à elle par des moyens de fixation. Cela permet d'assurer une meilleure tenue des pièces compte tenu des contraintes subies par l'entrée d'air.

De préférence, l'extrémité aval de la paroi externe est configurée pour supporter une extrémité avant du capot extérieur de soufflante, en position assemblée, ce support étant de préférence complété par des moyens de fixation.

Dans une telle configuration, la jonction de l'extrémité aval de la paroi externe avec la structure de support est située sous la zone d'appui du capot extérieur de soufflante sur la paroi externe de l'entrée d'air.

Dans ce cas, l'extrémité aval de la paroi externe présente un décrochement dimensionné en fonction de l'épaisseur radiale dudit capot extérieur de soufflante de sorte que les deux parois formant succésivement la ligne aérodynamique extérieure de la nacelle soient continues et affleurantes.

Du fait que la jonction soit située sous la zone d'appui du capot extérieur de soufflante, cela permet de ne pas impacter la qualité des lignes et l'aspect cosmétique (peinture) par des fixations apparentes. De ce fait, les éventuels moyens de fixation peuvent être de tailles plus importantes et moins nombreux.

Selon un autre aspect l'invention concerne une nacelle comportant une entrée d'air comportant tout ou partie des caractéristiques précitées.

D'autres caractéristiques et avantages de l'invention ressortiront à la lecture de la description qui suit, donnée uniquement à titre d'exemple, en référence aux figures annexées.
La figure 1 est une coupe schématique partielle d'un mode de réalisation d'une nacelle.
La figure 2 est une vue en coupe schématique d'une entrée d'air selon un mode de réalisation.
Les figures 3, 4 et 5 sont des vues en coupe d'une entrée d'air selon un mode de réalisation.
Les figures 6A et 6B sont vues en coupe d'une entrée d'air selon deux autres modes de réalisation.
La figure 7 est une vue d'une fenêtre d'accès traversée par un outil de maintenance lors d'une opération de maintenance de l'entrée d'air selon un mode de réalisation.
Les figures 8, 9, 10, 11 sont des vues en perspective d'une structure support selon différentes variantes de fixation avec la paroi externe de l'entrée d'air et du capot extérieur de soufflante.

Sur l'ensemble de ces figures, des références identiques ou analogues désignent des organes ou ensembles d'organes identiques ou analogues.

L'expression « amont » et « avant » seront utilisées indifféremment l'une de l'autre pour désigner l'amont de l'entrée d'air et l'expression « aval » et « arrière » seront utilisées indifféremment l'une de l'autre pour désigner l'aval de l'entrée d'air.

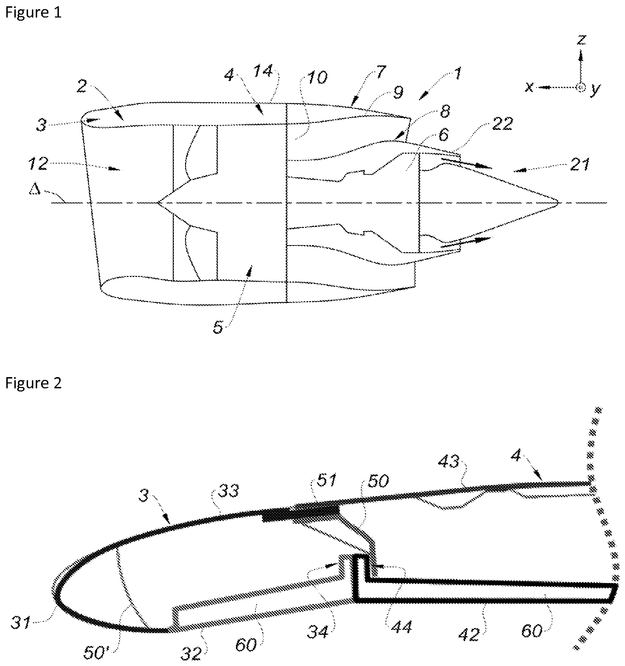

Comme représenté sur la figure 1, une nacelle 1 selon l'invention présente une forme sensiblement tubulaire selon un axe longitudinal Δ (direction parallèle à X).

La nacelle 1 comprend une section amont 2 avec une lèvre d'entrée d'air 3, une section médiane 4 entourant une soufflante 5 d'un moteur 6 tel qu'un turboréacteur double flux et une section aval 7 abritant un système d'inversion de poussée (non visible), la nacelle servant à canaliser les flux d'air généré par le moteur 6.

L'entrée d'air 3 se divise en deux parties, à savoir d'une part, une lèvre 31 d'entrée adaptée pour permettre la captation optimale vers le turboréacteur de l'air nécessaire à l'alimentation de la soufflante et des compresseurs internes du turboréacteur, et d'autre part, une structure aval 32, 33 sur laquelle est rapportée la lèvre et destinée à canaliser convenablement l'air vers les aubes de la soufflante. L'ensemble est rattaché en amont d'un carter de la soufflante appartenant à la section médiane 4 de la nacelle 1.

La section aval 7 comprend quant à elle une structure interne 8 (encore appelée « inner fixed structure » ou « IFS ») entourant la partie amont du turboréacteur 6, une structure externe (encore appelée « outer fan structure » ou « OFS ») 9 formant le canal flux froid et fixes par rapport au moteur, et un capot mobile comportant des moyens d'inversion de poussée.

L'IFS 8 et l'OFS 9 délimite une veine 10 permettant le passage d'un flux d'air 12 pénétrant la nacelle 1 au niveau de la lèvre d'entrée d'air 3.

La nacelle 1 comporte un sommet 14 destiné à recevoir un mât réacteur d'attache permettant de fixer ladite nacelle 1 à une aile de l'aéronef. Pour ce faire, ledit sommet 14 comporte des moyens pour fixer ledit mât réacteur.

La nacelle de turboréacteur est en particulier suspendue au mât réacteur, par le biais d'une poutre au niveau de ce sommet 14.

La nacelle 1 se termine par une tuyère d'éjection 21.

Comme représenté plus spécifiquement sur les figures 2 à 4, l'entrée d'air 3 comporte une lèvre avant 31 formant un bord d'attaque de la nacelle, ladite lèvre 31 reliant une paroi interne 32 sensiblement cylindrique et une paroi externe 33 sensiblement cylindrique.

En d'autres termes, l'entrée d'air 3 présente une structure sensiblement annulaire comprenant la paroi externe 33 assurant la continuité aérodynamique externe de la nacelle, et la paroi interne 32 assurant la continuité aérodynamique interne de la nacelle, notamment avec le carter de soufflante au niveau de la section médiane 4.

La nacelle comprend une enveloppe extérieure et une enveloppe intérieure, ladite enveloppe extérieure comportant des capots de soufflante affleurant avec la paroi externe 33 assurant la continuité aérodynamique externe et ladite enveloppe intérieure comportant un carter de soufflante affleurant avec la paroi interne 32 assurant la continuité aérodynamique interne de la nacelle 1.

La lèvre 31 d'entrée d'air assure la jonction entre ces deux parois 32, 33 et peut notamment être intégrée à la paroi interne et/ou externe formant ainsi une paroi principale de l'entrée d'air 3 formée d'un seul tenant.

L'enveloppe intérieure de la nacelle 1 comporte une partie amont (du côté de la section d'entrée d'air 3 de la nacelle 1) présentant notamment une virole acoustique et une partie aval (du côté de l'inverseur de poussée) comprenant le carter 42 de soufflante 5. Les deux parties amont et aval sont reliées par des brides d'attache.

Plus précisément, l'entrée d'air 3 comprend au niveau de sa paroi interne 32 une bride 34 de montage avant configurée pour coopérer avec une bride 44 arrière solidaire d'une paroi du turboréacteur à son extrémité amont, en particulier du carter 42 de la soufflante 5 aussi appelé carter moteur et au niveau de son extrémité amont.

Cet assemblage des brides 34 et 44 assure la fixation de l'entrée d'air 3 avec la section médiane 4. Cet assemblage est complété et sécurisé par des moyens de fixation 45, par exemple de type vis-écrou.

La paroi externe 33 présente une extrémité aval 33' configurée pour être positionnée dans une zone de jonction affleurant avec une extrémité avant 43' du capot extérieur 43 de soufflante de sorte à assurer la continuité aérodynamique externe de la nacelle.

Pour maintenir une certaine rigidité à la structure, cette paroi externe 33 vient en appui contre une surface de support 51 d'une structure de support 50. De préférence, cet appui est complété par des moyens de fixation 35 pour fixer la structure de support 50 à ladite paroi externe de l'entrée d'air 3. Ces moyens de fixation 35 peuvent être par exemple des ensemble vis-écrou.

Cette structure de support 50 s'étend sensiblement radialement dans l'épaisseur de la nacelle 1 et est configurée pour être solidaire du carter 42 de soufflante, et plus particulièrement solidaire de la bride 44 arrière, sur une face arrière de celle-ci, c'est-à-dire oposée à une face avant configurée pour coopérer et/ou être accolée avec une face arrière de la bride 34 de montage avant. Cela participe à l'amélioration du chemin d'efforts.

En d'autres termes, la structure de support 50 s'étend d'une extrémité inférieure configurée pour être solidaire de la section médiane 4, et plus particulièrement du carter 42 de soufflante, au niveau de la bride 44 arrière, jusqu'à une extrémité supérieure en contact au moins avec une partie aval de la paroi externe 33 de l'entrée d'air 3.

La structure de support 50 est fixée à la bride 44 arrière avec tout ou partie des mêmes moyens de fixation 45 de la bride 34 de montage avant et la bride 44 arrière,

La structure de support 50 étant solidaire de la bride 44 arrière, sur une face arrière de celle-ci, les moyens de fixation 45 tels que des ensembles vis-écrou traversent successivement de l'amont vers l'aval, respectivement : la bride 34 de montage avant, la bride 44 arrière puis l'extrémité inférieure de la structure de support 50.

Conformément à l'invention, la structure de support 50 comporte des fenêtres d'accès 70 configurées être traversées par des outils 80 de maintenance lors des opérations de maintenance de l'entrée d'air 3.

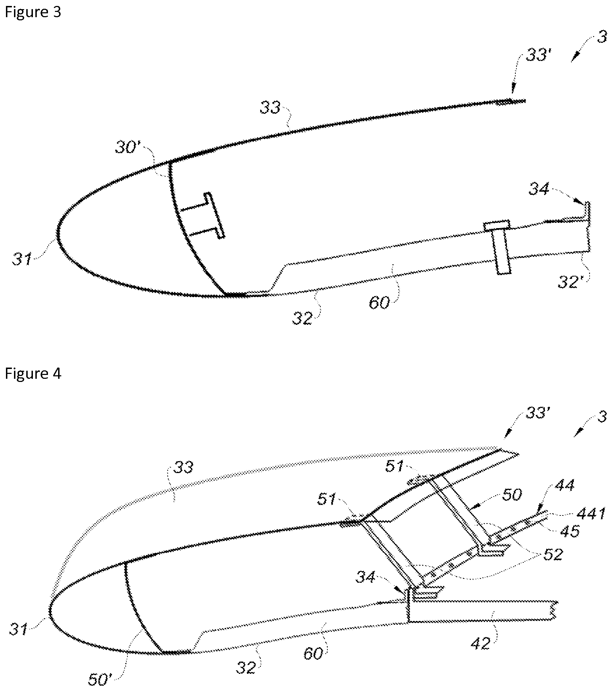

Comme illustré sur la figure 4, dans ce mode de réalisation, la structure de support 50 est formée par une pluralité de tiges de support ou montants 52. L'espace formé entre chacune des tiges de supports forme une fenêtre d'accès 70. Dans ce cas les fenêtre d'accès sont délimitées latéralement par les deux montants 52 adjacents d'une part et radialement par la bride 44 arrière et la paroi externe 33.

Les tiges de support 52 sont réparties sur toutes la circonférence de la nacelle 1 de façon relativement homogène, notamment autour de la bride 44 arrière, et sont distantes les unes des autres d'une distance prédéterminée suffisante pour garantir l'intégrité structurelle de l'entrée d'air de la nacelle 1.

Dans ce mode de réalisation (voir les figures 3 à 5), l'extrémité aval 33' de la paroi externe 33 est située longitudinalement en amont de la bride 34 de montage avant. Du fait de cette configuration, la structure de support 52 présente une inclinaison telle que son orientation s'écarte globalement vers l'avant de l'axe longitunial de la nacelle en même temps qu'elle s'éloigne de l'axe longitudinal.

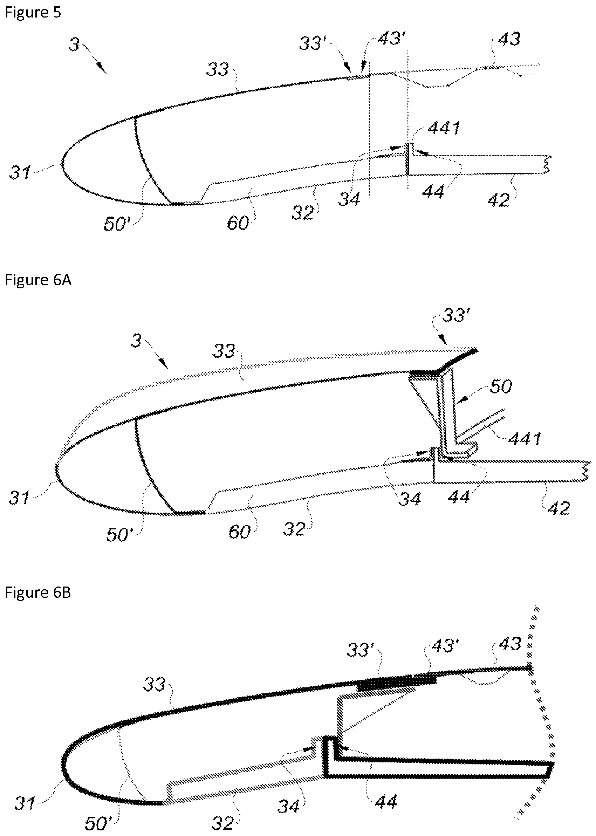

En particulier les figures 3 et 5 représentent également des entrées d'air 3 selon des modes de réalisation illustrés ici sans la cloison 50 pour illustrer le décalage de l'extrémité aval 33' de la paroi externe 33 longitudinalement en amont de la bride 34 de montage avant.

Sur la figure 3 sont illustrés en outre des équipements de l'entrée d'air 3 tels qu'une alimentation d'un système de dégivrage de l'entrée d'air solidaire de la cloison avant 50' et une sonde moteur traversant la structure d'atténuation acoustique 60 équipant la paroi interne 32.

Selon d'autres modes de réalisation, l'extrémité aval 33' de la paroi externe 33 peut être située longitudinalement sensiblement au niveau de la bride 34 de montage avant (voir la figure 6A), ou être située longitudinalement sensiblement en aval de la bride 34 de montage avant (voir la figure 6B).

Le vocable « en aval de la bride de montage avant » s'entend comme en aval de l'extrémité amont de la bride, soit en aval d'un plan de jonction entre les deux brides en position assemblée.

En vue de diminuer la pollution sonore générée par le turboréacteur, au moins la paroi interne 32 de l'entrée d'air 3 est équipée d'une structure d'atténuation acoustique 60, laquelle est située dans l'espace délimité par la paroi principale à savoir la paroi interne 32, la paroi externe 33 et la lèvre avant 31.

Cette structure d'atténuation acoustique 60 se présente sous la forme d'un panneau à âme alvéolaire formant une structure alvéolaire dont les alvéoles délimitent des cellules acoustiques, la structure acoustique comprenant en outre une peau interne pleine assurant notamment la tenue mécanique du panneau.

Cette structure acoustique 60 est de préférence formée en matériaux composites. Dans le cas où les températures mises en jeu le permettent, d'autres matériaux peuvent être utilisés. Ces matériaux peuvent aussi être fonction du procédé de fabrication utilisé, par exemple par moulage en thermoplastique, par fabrication additive en aluminium, etc.

La section médiane comporte aussi une telle structure acoustique équipant notamment au moins en partie le carter 42 de soufflante 5.

Les brides de montage 34 et arrière 44 sont solidaires de ces structures acoustiques 60 respectives.

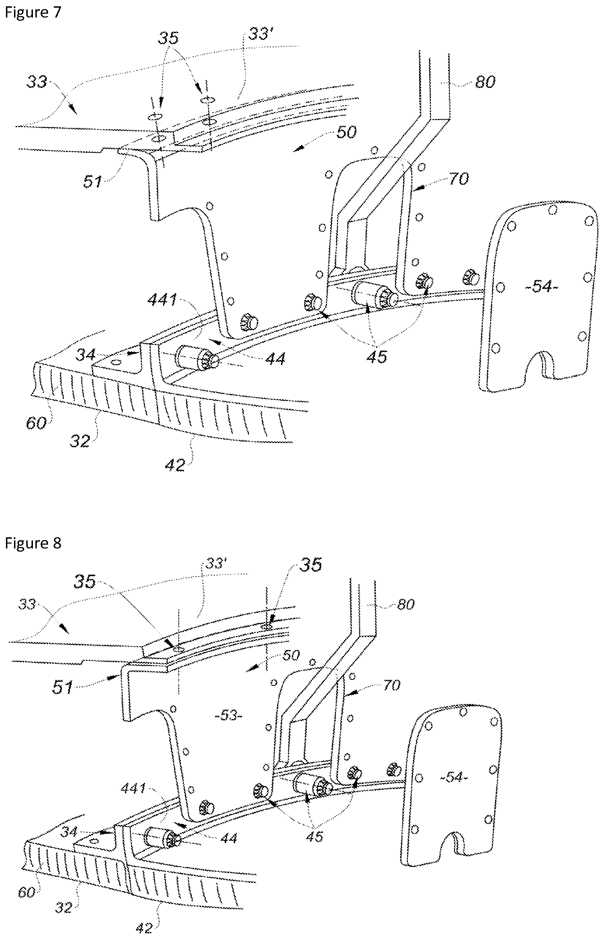

La figure 7 illustre une vue détaillée d'une structure de support 50 selon un mode de réalisation durant une opération de maintenance de l'entrée d'air 3.

Dans l'opération de dépose ou de repose de l'entrée d'air 3 du carter de soufflante 42, deux solutions sont possibles suivant les configurations du supportage arrière de la paroi externe 33.

Dans le cas où le supportage de l'entrée d'air 3 par la structure de support 50 est discontinue autour de la paroi du turboréacteur du carter de soufflante (comme illustré notamment sur la figure 4), lors d'une opération de maintenance, il suffit de désolidariser la paroi externe 33 de la structure de support 50, par exemple en effectuant dans une premier temps une dépose des capots de soufflante (s'ils sont fixés) ou alors les ouvrir (s'ils sont mobiles et/ou articulés), puis ladite paroi externe 33 est desoldarisée de la structure de support 50. La structure de support 50 reste fixée sur le carter de soufflante lors de la dépose de l'entrée d'air. Ladite structure de support 50 est agencée pour former de par sa configuration matérielle des fenêtres d'accès 70 configurées être suffisamment petites pour garantir l'intégrité sutrcturelle de la nacelle et suffisament grande pour être traversées par des outils 80 de maintenance lors des opérations de maintenance de l'entrée d'air 3. Il est alors aisé d'accéder à la fois à la bride 34 de montage avant et à la bride 44 arrière.

Une telle structure de support 50 supportant la paroi externe 33 de l'entrée d'air 3 et configurée de façon discontinue autour de la paroi du turboréacteur du carter de soufflante est généralement dédiée à un environnement non feu c'est-à-dire qu'il n'existe pas de besoin pour ce type de nacelle de protéger localement cette géographie de la nacelle d'un risque de feu.

Dans le cas du mode de réalisation illustré sur la figure 7, la structure de support 50 comprend une cloison laquelle, de façon générale, est continue autour de la paroi du turboréacteur du carter de soufflante. Elle permet en particulier de garantir une étanchéité thermique compatible avec une protection au feu afin de garantir la protection d'un éventuel équipement qui serait logé dans cet espace. En d'autres termes, lorsque la structure de support 50 comprend une cloison, ladite cloison peut être segmentée, mais est de préférence pleine, c'est-à-dire continue, lorsqu'elle assure une fonction porte feux.

De la même manière, lors d'une opération opération de mainteance, il suffit de désolidariser la paroi externe 33 de la structure de support 50 et de garder cette structure de support 50 fixée sur le carter de soufflante 42 lors de la dépose de l'entrée d'air 3.

Ladite structure de support 50 étant continue, elle est configurée pour présenter des fenêtres d'accès 70 configurées être suffisamment grande pour être traversées par des outils 80 de maintenance lors des opérations de maintenance de l'entrée d'air 3. Dans ce mode de réalisation, une fenêtre d'accès 70 est délimité par des bords de la cloison 50 d'une part et par la bride 44 arrière d'autre part.

Une cloison de fermeture ou trappe 54 est également prévue pour fermer les fenêtres d'accès 70 durant l'utilisation de la nacelle afin de garantir la continuité de la protection thermique, si celle-ci est nécessaire.

Il est alors aisé d'accéder à la fois à la bride 34 de montage avant et à la bride 44 arrière, comme cela est illustré sur cette figure 7 afin de permettre leur démontage.

Lorsque la structure de support 50 comprend une cloison, ladite cloison peut être segmentée. Elle est de préférence pleine lorsqu'elle assure une fonction porte feux.

Une telle structure de support 50 du bord aval 33' de la paroi externe 33 de l'entrée d'air directement reliée au carter de soufflante 42, et non pas à la paroi interne 32 est particulièrement avantageux en terme de reprise d'efforts. Ce concept permet également un accès facilité pour les besoins de maintenabilité aux brides 34, 44 et des équipements présents dans l'entrée d'air comme par exemple le tube de dégivrage.

Les figures 8, 9, 10 et 11 illustrent des vues en perspective d'une structure support 50 selon différentes variantes de fixation avec la paroi externe 33 de l'entrée d'air 3 et du capot extérieur de soufflante 43.

Il est visible sur la figure 8, l'extrémité aval 33' de la paroi externe 33 est configurée pour supporter l'extrémité avant 43' du capot 43 extérieur de soufflante et être fixée à elle, en position assemblée.

Cette paroi externe 33 vient en appui contre la surface de support 51 de la structure de support 50. Cet appui est également complété par des moyens de fixation pour fixer la structure de support 50 à ladite paroi externe 33 de l'entrée d'air 3. Ces moyens de fixation 35 peuvent être par exemple des ensemble vis-écrou.

Par ailleurs l'extrémité aval 33' de la paroi externe 33 présente un décrochement dimensionné en fonction de l'épaisseur radiale dudit capot extérieur de soufflante 43 de sorte que les deux parois 33, 43 formant succésivement la ligne aérodynamique extérieure de la nacelle soient continues et affleurantes.

Dans une telle configuration, la jonction de l'extrémité aval 33' de la paroi externe 33 avec la structure de support 50 est située sous la zone d'appui du capot 43 extérieur de soufflante sur la paroi externe 33 de l'entrée d'air 3. Cela permet de ne pas impacter la qualité des lignes et l'aspect cosmétique par des fixations apparentes. De ce fait, les éventuels moyens de fixation peuvent être de tailles plus importantes et moins nombreux.

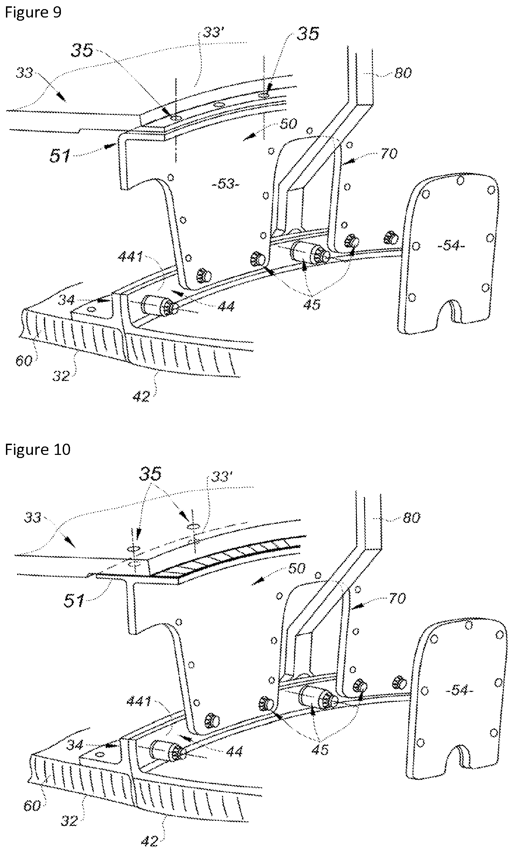

Dans le configuration illustrée sur la figure 9, l'extrémité avant 43' du capot 43 extérieur de soufflante est en appui direct et fixée ensemble avec l'extrémité aval 33' de la paroi externe 33.

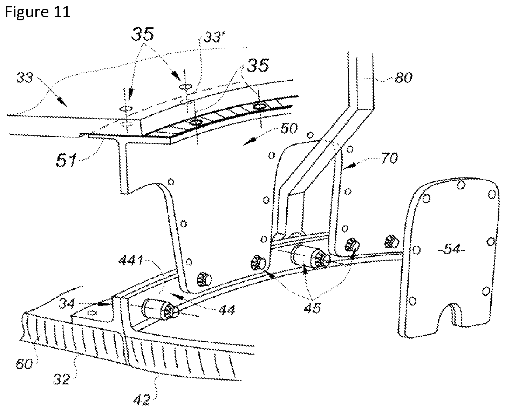

Selon une autre variante, les extémités respectives 33', 43' des parois externe 33 et du capot extérieur de soufflante 43 peuvent être aboutées et supportées directement sur la surface de support 51 de la structure de support 50 (voir par exemple les figures 10 et 11).

Dans ce cas, les moyens de fixation 35 permettent la fixation de l'extrémité aval 33' de la paroi externe 33 avec la structure de support 50 et l'extrémité avant 43' du capot 43 extérieur de soufflante peuvent être simplement en appui (voir figure 10) ou fixée de façon similaire avec la structure de support 50 (figure 11).

On notera que les extémités respectives 33', 43' des parois externe 33 et du capot extérieur de soufflante 43 peuvent aussi reposer sur une pièce intermédiaire ou sont fixées grâce à cette pièce intermédiaire qui repose sur sur la surface de support 51 de la structure de support 50.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Entrée d'air (3) pour une nacelle (1) de moteur (6) d'aéronef, l'entrée d'air (3) comportant une lèvre (31) avant reliant une paroi interne (32) sensiblement cylindrique et une paroi externe (33) sensiblement cylindrique, une bride (34) de montage avant configurée pour coopérer avec une bride (44) arrière d'une paroi du turboréacteur formant un carter (42) de soufflante, l'entrée d'air présentant une structure de support (50) s'étendant d'une extrémité inférieure configurée pour être solidaire du carter (42) de soufflante, par la bride (44) arrière, jusqu'à une extrémité supérieure en contact au moins avec une partie aval de la paroi externe (33) de l'entrée d'air (3), ladite structure de support (50) comportant ou formant des fenêtres d'accès (70) configurées pour être traversées par des outils de maintenance lors des opérations de maintenance de l'entrée d'air (3), **caractérisée en ce que** l'extrémité inférieure de la structure de support (50) est configurée pour être solidaire d'une face arrière (441) de la bride (44) arrière.

2. Entrée d'air (3) selon la revendication 1, **caractérisée en ce que** la lèvre (31) d'entrée d'air peut être intégrée à la paroi interne (32) et/ou externe (33) de sorte à former une paroi d'un seul tenant.

3. Entrée d'air (3) selon la revendication 1 ou 2, **caractérisée en ce que** la structure de support (50) est disposée de manière continue autour de la paroi du turboréacteur formant le carter de soufflante, et comprend par exemple une cloison, et/ou de manière discontinue autour de la paroi du turboréacteur du carter de soufflante, et comprend par exemple un ensemble de tiges de support (52).

4. Entrée d'air (3) selon l'une quelconque des revendications précédentes, **caractérisée en ce que** la bride (34) de montage avant et la bride (44) arrière sont fixées ensemble par des moyens de fixation (45), la structure de support (50) étant fixée à la bride (44) arrière avec tout ou partie de ces mêmes moyens de fixation (45).

5. Entrée d'air (3) selon l'une quelconque des revendications précédentes, **caractérisée en ce que** la partie de la paroi externe (33) configurée pour venir au moins en contact avec l'extrémité supérieure de la structure de support (50), de préférence au niveau d'une surface de support (51) de ladite structure de support (50), comprend une extrémité aval (33') de la paroi externe (33).

6. Entrée d'air (3) selon l'une quelconque des revendications précédentes, **caractérisée en ce que**, en plus d'être en contact contre une surface de support (51) de la structure de support (50), la paroi externe (33) est en appui contre elle et fixée à elle par des moyens de fixation (35).

7. Entrée d'air (3) selon l'une quelconque des revendications précédentes, **caractérisée en ce que** l'extrémité aval (33') de la paroi externe (33) est configurée pour supporter une extrémité avant (43') du capot extérieur (43) de soufflante, en position assemblée, ce support étant de préférence complété par des moyens de fixation.

8. Nacelle (1) pour moteur d'aéronef **caractérisée en ce qu'**elle comporte une entrée d'air (3) selon l'une quelconque des revendications précédentes.

## Patentansprüche

1. Lufteinlass (3) für eine Gondel (1) eines Flugzeugmotors (6), wobei der Lufteinlass (3) eine vordere Lippe (31) umfasst, die eine im Wesentlichen zylindrische Innenwand (32) und eine im Wesentlichen zylindrische Außenwand (33) verbindet, einen vorderen Montageflansch (34) umfasst, der dafür konfiguriert ist, mit einem hinteren Flansch (44) einer Wand des Turbotriebwerks, die ein Gebläsegehäuse (42) bildet, zusammenzuwirken, wobei der Lufteinlass
eine Trägerstruktur (50) aufweist, die sich von einem unteren Ende, das dafür konfiguriert ist, fest mit dem Gebläsegehäuse (42) verbunden zu werden, über den hinteren Flansch (44) bis zu einem oberen Ende erstreckt, das mindestens mit einem stromabwärtigen Teil der Außenwand (33) des Lufteinlasses (3) in Kontakt steht, wobei die Trägerstruktur (50) Zugangsfenster (70) umfasst oder bildet, die dafür konfiguriert sind,
bei Wartungsarbeiten am Lufteinlass (3) von Wartungswerkzeugen durchquert zu werden, **dadurch gekennzeichnet, dass** das untere Ende der Trägerstruktur (50) dafür konfiguriert ist, fest mit einer hinteren Seite (441) des hinteren Flansches (44) verbunden zu werden.

2. Lufteinlass (3) nach Anspruch 1, **dadurch gekennzeichnet, dass** die Lufteinlasslippe (31) in die Innen- (32) und/oder die Außenwand (33) integriert werden kann, um eine einteilige Wand zu bilden.

3. Lufteinlass (3) nach Anspruch 1 oder 2, **dadurch gekennzeichnet, dass** die Trägerstruktur (50) durchgehend um die Wand des Turbotriebwerks, die das Gebläsegehäuse bildet, herum angeordnet ist, und zum Beispiel eine Trennwand umfasst, und/oder nicht durchgehend um die Wand des Turbotriebwerks des Gebläsegehäuses herum, und zum Beispiel einen Satz Trägerstangen (52) umfasst.

4. Lufteinlass (3) nach einem der vorstehenden Ansprüche, **dadurch gekennzeichnet, dass** der vordere Montageflansch (34) und der hintere Flansch (44) durch Befestigungsmittel (45) aneinander befestigt sind, wobei die Trägerstruktur (50) mit allen oder einem Teil derselben Befestigungsmittel (45) am hinteren Flansch (44) befestigt ist.

5. Lufteinlass (3) nach einem der vorstehenden Ansprüche, **dadurch gekennzeichnet, dass** der Teil der Außenwand (33), der dafür konfiguriert ist, mindestens mit dem oberen Ende der Trägerstruktur (50), vorzugsweise im Bereich einer Trägerfläche (51) der Trägerstruktur (50), in Kontakt zu kommen, ein stromabwärtiges Ende (33') der Außenwand (33) umfasst.

6. Lufteinlass (3) nach einem der vorstehenden Ansprüche, **dadurch gekennzeichnet, dass** die Außenwand (33) zusätzlich dazu, dass sie an einer Trägerfläche (51) der Trägerstruktur (50) in Kontakt steht, an dieser anliegt und durch Befestigungsmitteln (35) an ihr befestigt ist.

7. Lufteinlass (3) nach einem der vorstehenden Ansprüche, **dadurch gekennzeichnet, dass** das stromabwärtige Ende (33') der Außenwand (33) dafür konfiguriert ist, in zusammengebauter Position ein vorderes Ende (43') der äußeren Gebläsehaube (43) zu tragen, wobei dieser Träger vorzugsweise durch Befestigungsmitteln ergänzt ist.

8. Gondel (1) für einen Flugzeugmotor, **dadurch gekennzeichnet, dass** sie einen Lufteinlass (3) nach einem der vorstehenden Ansprüche umfasst.

## Claims

1. An air intake (3) for a nacelle (1) of an aircraft engine (6), the air intake (3) including a front lip (31) connecting a substantially cylindrical inner wall (32) and a substantially cylindrical outer wall (33), a front mounting flange (34) configured to cooperate with a rear flange (44) of a wall of the turbojet engine forming a fan casing (42), the air intake having a support structure (50) extending from a lower end configured to be secured to the fan casing (42), by the rear flange (44), up to an upper end in contact at least with a downstream portion of the outer wall (33) of the air intake (3), said support structure (50) including or forming access apertures (70) configured to be crossed by maintenance tools during the operations of maintenance of the air intake (3), **characterized in that** the lower end of the support structure (50) is configured to be secured to a rear face (441) of the rear flange (44).

2. The air intake (3) according to claim 1, **characterized in that** the air intake lip (31) may be integrated to the inner (32) and/or outer (33) wall so as to form a wall in one-piece.

3. The air intake (3) according to claim 1 or 2, **characterized in that** the support structure (50) is disposed continuously around the wall of the turbojet engine forming the fan casing, and comprises for example a partition, and/or discontinuously around the wall of the turbojet engine of the fan casing, and comprises for example a set of support rods (52).

4. The air intake (3) according to any one of the preceding claims, **characterized in that** the front mounting flange (34) and the rear flange (44) are fastened together by fastening means (45), the support structure (50) being fastened to the rear flange (44) with all or part of these same fastening means (45).

5. The air intake (3) according to any one of the preceding claims, **characterized in that** the portion of the outer wall (33) configured to come at least into contact with the upper end of the support structure (50), preferably at the level of a support surface (51) of said support structure (50), comprises a downstream end (33') of the outer wall (33).

6. The air intake (3) according to any one of the preceding claims, **characterized in that**, besides being in contact against a support surface (51) of the support structure (50), the outer wall (33) is bearing against it and fastened thereto by fastening means (35).

7. The air intake (3) according to any one of the preceding claims, **characterized in that** the downstream end (33') of the outer wall (33) is configured to support a front end (43') of the fan external cowl (43), in the assembled position, this support being preferably completed by fastening means.

8. A nacelle (1) for an aircraft engine **characterized in that** it includes an air intake (3) according to any one of the preceding claims.
